# FASCICULE DE BREVET EUROPEEN

(11) **EP 3 445 636 B1**
(45) Date de publication et mention de la délivrance du brevet: **22.07.2020**
(21) Numéro de dépôt: 17722492.0
(22) Date de dépôt: 18.04.2017
(51) Int. Cl.: B62B 7/00, B62B 7/12, B62B 9/12, B62B 9/28

(54) **POUSSETTE SIMPLE CONVERTIBLE EN POUSSETTE TANDEM D'UTILISATION PRATIQUE**
IN EINEN DOPPELKINDERWAGEN UMWANDELBARER EINZELKINDERWAGEN MIT PRAKTISCHER VERWENDUNG
SINGLE PUSHCHAIR THAT CAN BE CONVERTED INTO A TANDEM PUSHCHAIR THAT IS PRACTICAL TO USE

(30) Priorité: 19.04.2016 FR 1653462
(43) Date de publication de la demande: 27.02.2019
(73) Titulaire: Vidiamo, 92200 Neuilly-Sur-Seine (FR)
(72) Inventeur: PERROT, Bénédicte, 92200 Neuilly-Sur-Seine (FR)
(74) Mandataire: IP Trust
(86) Numéro de dépôt international: PCT/FR2017/050915
(87) Numéro de publication internationale: WO 2017/182751

(56) Documents cités:
- WO-A1-2010/019779
- WO-A1-2010/116215
- CN-U- 2 043 579
- US-A1- 2007 001 429
- US-A1- 2010 283 227
- US-B2- 8 915 516

## Description

L'invention concerne une poussette simple convertible en poussette tandem.

Des poussettes de ce type présente l'avantage de proposer aux adultes accompagnant un ou deux enfants, de pouvoir proposer dans la configuration simple une unique assise pour un enfant, et dans la configuration tandem, deux assises pour les deux enfants.

Cela permet en cours de promenade avec par exemple deux enfants d'âges différents, de véhiculer le plus jeune installé sur le siège principal de la poussette en configuration simple, alors que le plus grand marche, et lorsque l'enfant le plus grand manifeste sa fatigue, de l'installer sur un siège auxiliaire de la poussette, sans pâtir, dans la configuration simple de l'encombrement d'une poussette tandem.

### ETAT DE LA TECHNIQUE

Il est connu du brevet US 8 915 516 une poussette simple convertible en poussette tandem et entièrement repliable. La transition entre la configuration simple et la configuration tandem s'effectue au moyen d'un châssis de structure télescopique augmentant sa longueur afin de libérer un espace à l'arrière du siège principal, où peut être positionné un siège auxiliaire, pour un enfant supplémentaire.

Cependant d'une part, le châssis de structure télescopique comprend deux traverses latérales à hauteur de l'enfant, constituées chacune de deux tubes emmanchés l'un dans l'autre, susceptibles de provoquer un pincement de la peau d'un enfant lors du passage de la poussette vers l'une ou l'autre de ses configurations simple ou double. En outre, pour utiliser cette poussette, il est nécessaire de stocker lors de la promenade le siège auxiliaire lorsqu'il n'est pas utilisé, ce qui implique un encombrement supplémentaire pour l'adulte accompagnant les enfants. Par ailleurs, lorsque la poussette est utilisée en version tandem, il n'est pas prévu que le dossier de l'un des deux sièges puisse s'incliner vers l'arrière afin de permettre à l'un des deux enfants de s'allonger.

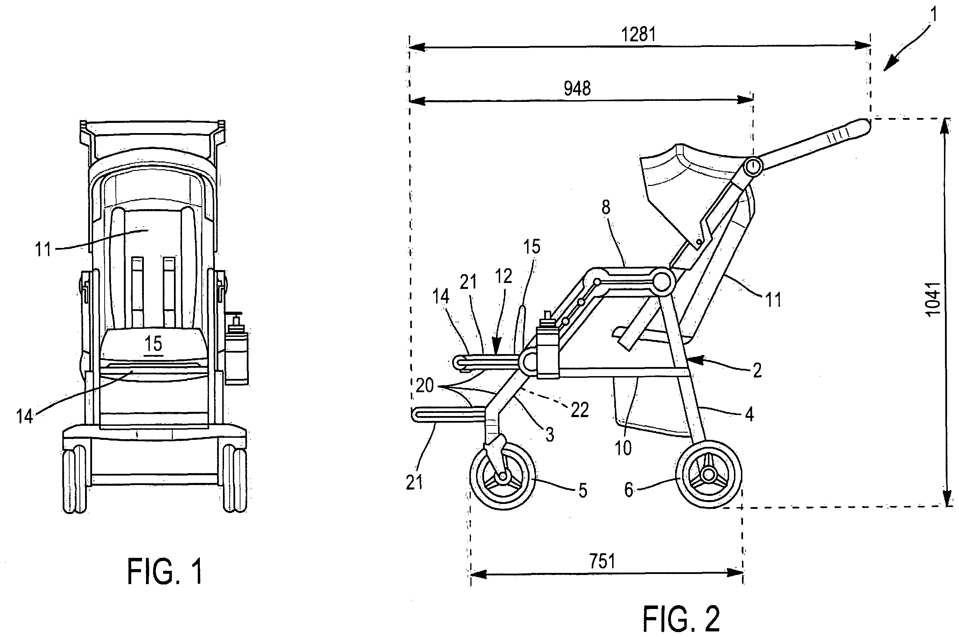

Le brevet US 6 676 140 décrit une poussette à double sièges encastrables l'un dans l'autre (figure 2) et pouvant être espacés l'un de l'autre pour permettre l'accueil d'un enfant supplémentaire (figure 1) par simple translation. La conception de cette poussette ne permet cependant pas un pliage total de type poussette canne bien qu'elle présente l'avantage de la simplicité de déploiement du siège auxiliaire.

Le brevet US 8 128 103 concerne une poussette canne pourvue d'un siège auxiliaire fixé sur un côté du siège principal, sans possibilité de pliage général de la poussette. Lors de l'utilisation avec deux enfants, l'encombrement latéral de la poussette est considérablement augmenté, et les risques de blessures de l'enfant positionné sur le siège auxiliaire d'autant.

### OBJET DE L'INVENTION

L'invention vise à pallier ces problèmes en proposant une poussette simple convertible en poussette tandem, sans siège auxiliaire à rapporter, et dont le passage entre les configurations simple et tandem assure toute la sécurité requise à l'enfant ou aux enfants l'occupant.

A cet effet, et selon un premier aspect, l'invention propose une poussette simple convertible en poussette tandem selon revendication 1 comprenant :
- un châssis
- un siège principal monté mobile en translation longitudinale vis à vis du châssis entre une position simple occupant et une position double occupants
- un siège auxiliaire, monté mobile en translation longitudinale vis à vis du châssis entre une position inactive escamoté sous le siège principal occupant sa position simple occupant et une position active déployée en dehors du siège principal occupant sa position double occupants.

Selon d'autres caractéristiques avantageuses de l'invention :
- le siège auxiliaire comprend une assise et un dossier rabattable contre l'assise dans la position inactive escamotée
- la poussette comprend des moyens de déplacement automatique du dossier du siège auxiliaire entre une position rabattue et la position déployée sur déplacement du siège auxiliaire entre sa position escamotée et sa position déployée
- le siège principal est monté en translation au moyen d'un axe coulissant dans un rail du châssis
- le siège principal est monté à pivotement entre une position d'assise d'un occupant et une position d'allongement d'un occupant dans la position simple occupant et/ou dans la position double occupants
- le châssis de structure comprend deux montants avant supportant les roues avant et deux montants arrière supportant les roues arrière, les montants avant et arrière situés d'un même côté du châssis étant rigidement fixés l'un à l'autre par une traverse principale
- le siège principal est monté à pivotement entre la position d'assise d'un occupant et une position de pliage de la poussette dans laquelle il est rabattu entre les montants avant du châssis lorsque le siège auxiliaire occupe sa position escamotée
- les montants arrière sont montés à pivotement vis à vis de la traverse entre une position classique de roulage et une position de pliage de la poussette dans laquelle ils sont disposés sensiblement parallèlement aux montants avant
- le siège auxiliaire et ses moyens de déplacement entre les positions escamotée et déployée s'inscrit dans le volume défini par les montants avant et les montants arrière dans leur position de pliage de la poussette
- les moyens de déplacement du siège auxiliaire entre sa position escamotée et sa position déployée comprennent une pièce rigide à section en forme de C dont l'ouverture est orientée vers l'avant de la poussette, et dont les deux branches parallèles sont montées coulissantes vis à vis du châssis et plus particulièrement du montant avant de la poussette
- les montants avant comprennent chacun deux axes de guidage du coulissement des branches de la pièce en forme de C
- le châssis comprend une traverse télescopique entre une position longue d'utilisation courante de la poussette en configuration simple ou tandem, et une position courte de pliage de la poussette
- le châssis est de structure principale non télescopique, la traverse supérieure principale étant en outre de type non télescopique
- selon une variante de réalisation, le châssis comprend deux barres latérales déployables (43) relativement à des supports fixes latéraux correspondants (33), deux bras latéraux (36) montés par leurs extrémités correspondantes, aux extrémités avant de la barre par des liaisons pivots, les extrémités opposées de ces bras se translatant dans des rails de guidage solidaires des supports fixes correspondants 33 lorsque la poussette passe d'une configuration simple à une configuration double.
- Dans ce cas, le siège auxiliaire est monté à translation relativement aux barre entre ses positions escamoté et déployé.
- Idéalement, la poussette comprend des moyens de blocage du siège auxiliaire dans une position intermédiaire, dans laquelle lorsque son dossier est rabattu contre son assise, la face arrière de son assise s'étend dans le prolongement longitudinal de l'assise du siège principal.
- L'invention concerne également un matelas spécialement conçu pour la poussette, comprenant une base définissant deux épaisseurs différentes susceptibles de compenser une différence de hauteur existant entre la surface supérieure du dossier rabattu du siège auxiliaire occupant sa position intermédiaire et la surface supérieure de l'assise du siège principal
- L'invention concerne encore un sac spécialement conçu pour la poussette présentant des dimensions variables dans le sens d'allongement de la poussette entre ses configurations tandem et simple.

### BREVE DESCRIPTION DES FIGURES

D'autres objets et avantages de l'invention apparaîtront au cours de la description qui suit, faite en référence à :
- la figure 1 qui représente une vue à l'échelle 1 :10 de face de la poussette selon un premier mode de réalisation de l'invention dans une configuration tandem
- la figure 2 qui représente une vue à l'échelle 1 :10 de côté de la poussette selon un premier mode de réalisation de l'invention dans une configuration tandem
- la figure 3 qui représente une vue à l'échelle 1 :10 de face de la poussette selon un premier mode de réalisation de l'invention dans une configuration simple
- la figure 4 qui représente une vue à l'échelle 1 :10 de côté de la poussette selon un premier mode de réalisation de l'invention dans une configuration simple
- les figures 5a à 5c illustrent respectivement trois étapes de pliage de la poussette selon un premier mode de réalisation de l'invention
- les figures 6a à 6d illustrent un deuxième mode de réalisation de l'invention en configuration simple, par des vues à l'échelle 1 :5 respectivement de côté (a), de face (b), en perspective de côté avant (c), et de dessus (d)
- les figures 7a à 7d illustrent le deuxième mode de réalisation de l'invention en configuration tandem, par des vues à l'échelle 1 :5 respectivement de côté (a), de face (b), en perspective de côté avant (c), et de dessus (d)
- les figures 8a à 8e illustrent le deuxième mode de réalisation de l'invention en configuration de stockage plié, par des vues à l'échelle 1 :5 respectivement de côté (a), de face (b), en perspective de côté avant (c), de dessus (d) et en perspective de côté arrière
- les figures 9a à 9d illustrent le deuxième mode de réalisation de l'invention en configuration d'allongement d'un enfant, par des vues à l'échelle 1 :5 respectivement de côté (a), de face (b), en perspective de côté avant (c), et de dessus (d)
- la figure 10 représente le deuxième de réalisation en configuration simple avec une première série d'accessoires
- la figure 11 représente le deuxième de réalisation en configuration tandem avec une deuxième série d'accessoires
- la figure 12 représente le deuxième de réalisation en configuration tandem, et avec le dossier du siège principal dans une position oblique vers l'avant de la poussette pour servir de support à un accessoire de type couffin ou nid d'ange, et le dossier du siège auxiliaire relevé
- la figure 13 représente le deuxième de réalisation en configuration d'allongement d'un enfant, pour servir de support à un accessoire de type matelas d'allongement pour l'enfant.

### DESCRIPTION DETAILLEE DES FIGURES

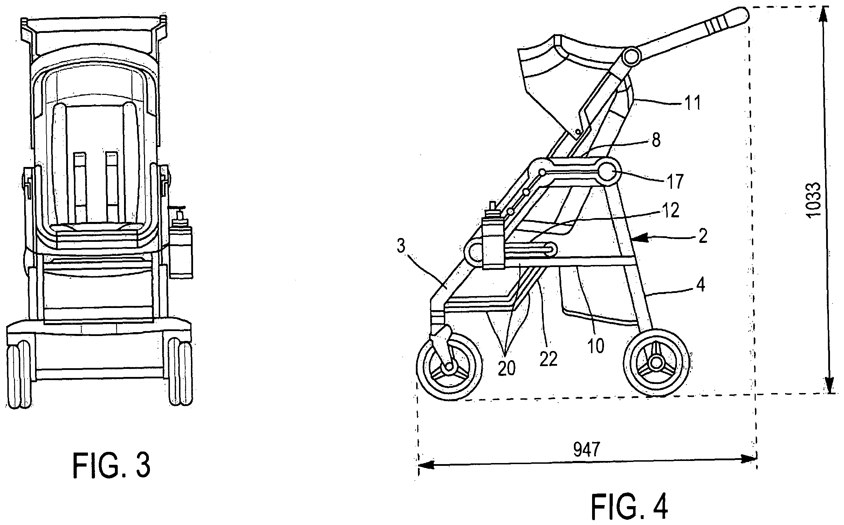

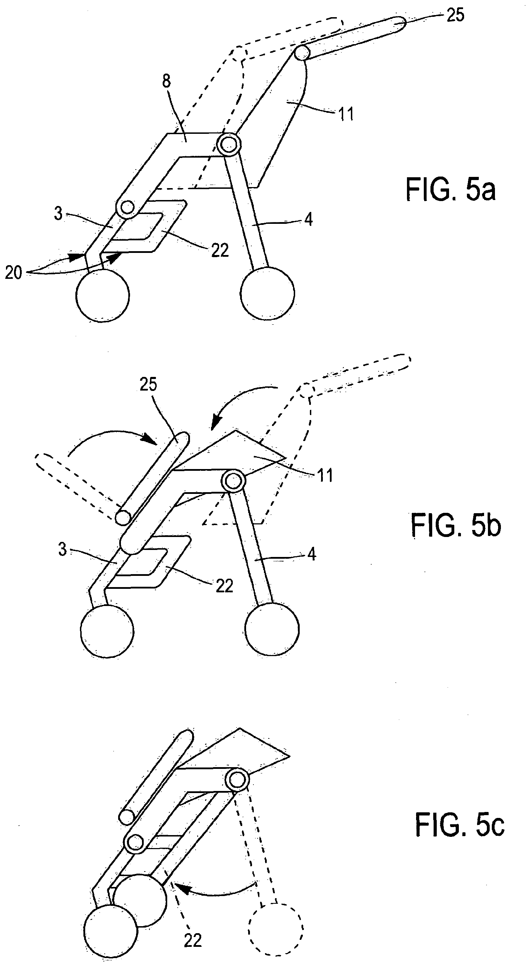

En relation avec la figure 1, il est décrit une poussette simple convertible en poussette tandem (1) comprenant principalement:
- un châssis qui selon le mode de réalisation illustré, est de structure principale non télescopique (2), ce châssis comprenant deux montants avant (3) supportant les roues avant (5) et deux montants arrière (4) supportant les roues arrière (6), les montants avant (3) et arrière (4) situés d'un même côté du châssis étant rigidement fixés l'un à l'autre par une traverse supérieure non télescopique (8) Le châssis (2) comprend en outre une traverse inférieure (10) située sensiblement à mi-hauteur du châssis, télescopique en longueur entre une position longue d'utilisation courante de la poussette (telle que représentée sur la figure 2) et une position courte de pliage de cette poussette (telle que représenté sur la figure 5). Les montants arrière (4) sont légèrement inclinés vers l'arrière et les montants avant (3) sont légèrement inclinés vers l'avant, tandis que la traverse supérieure (8) ainsi que la traverse inférieure (10) sont sensiblement horizontales.
- un siège principal (11) monté, pour les besoins du passage entre la configuration simple et tandem, mobile en translation longitudinale vis à vis de la traverse supérieure (8) entre une position simple occupant (figure 4) dans laquelle il est situé dans le volume délimité par les montants avant et arrière du châssis, et une position double occupants (figure 2) dans laquelle il est situé à l'arrière du châssis (en arrière du volume délimité par les montants avant et arrière du châssis)
- un siège auxiliaire (12), monté mobile en translation longitudinale vis à vis des montants avant (3) du châssis entre une position inactive (figure 4) escamoté sous le siège principal occupant sa position simple occupant (11) et une position active (figure 2) déployée en dehors du siège principal occupant sa position double occupants. Le siège auxiliaire (12) comprend une assise (14) et un dossier (15) rabattable contre l'assise (14) dans la position inactive escamotée. Les moyens de déplacement du siège auxiliaire entre sa position escamotée et sa position déployée comprennent deux pièces rigides (20) à section en forme de C dont l'ouverture est orientée vers l'avant de la poussette, et dont les deux branches parallèles (21) sont montées coulissantes horizontalement vis à vis du montant avant correspondant (3) de la poussette, au moyen de rails externes portés par ces branches (21), et d'un axe porté par chacun des montants avant correspondants (3) qui s'engagent dans ces rails. Un bouton de déverrouillage des déplacements avant arrière du siège auxiliaire, coïncidant axialement avec l'axe porté par la branche supérieure (21) permet lorsque actionné par enfoncement, d'autoriser les déplacements de l'axe auxiliaire de la position escamotée à la position déployée. La branche intermédiaire (22) de la pièce en forme de C présente la même inclinaison que celle du montant avant correspondant et est confondue avec celui-ci dans la configuration tandem de la poussette (figure 2), et en retrait arrière de celui-ci dans la configuration simple (figure 4)

Idéalement, la poussette comprend des moyens de déplacement automatique du dossier (15) du siège auxiliaire (12) entre une position rabattue et la position déployée sur déplacement du siège auxiliaire (12) entre sa position escamotée et sa position déployée.

Plus précisément, le siège principal (11) est monté en translation le long de la traverse supérieure (8) du châssis au moyen de deux axes latéraux de ce siège (11) coulissant dans deux rails correspondants disposés sur la face interne des traverses supérieures (8) du châssis.

Le siège principal (11) est en outre monté à pivotement entre une position d'assise d'un occupant et une position d'allongement d'un occupant basculé vers l'arrière, dans la position simple occupant comme dans la position double occupants, autour de ces axes. De plus, il est monté à pivotement entre la position d'assise d'un occupant et une position de pliage basculé à l'avant de la poussette dans laquelle il est rabattu entre les montants avant du châssis lorsque le siège auxiliaire occupe sa position escamotée

Un bouton (17) présentant la forme d'un demi-disque coïncidant axialement avec les deux axes, doit être activé par enfoncement pour autoriser la translation des axes le long des rails, ou le pivotement de ces axes lorsque le siège bascule entre ses positions classiques d'assise, sa position allongée et la position de pliage de la poussette. Il constitue un moyen de déverrouillage des déplacements du siège principal et un moyen de verrouillage de ceux-ci.

Pour autoriser un repliement total de la poussette conformément aux figures 5a à 5c, les montants arrière (4) sont montés à pivotement vis à vis de la traverse non télescopique (8) entre une position classique de roulage et une position de pliage de la poussette dans laquelle ils sont disposés sensiblement parallèlement aux montants avant (3) (figure 5c) et sont confondus avec la branche intermédiaire (22) de la pièce rigide en forme de C assurant les déplacements du siège auxiliaire (figure 4).

Lors du repliement de la poussette, dans un premier temps (figure 5a) le siège principal 11 est reculé en arrière du châssis, alors que le siège auxiliaire est escamoté sous lui.

Conformément à la figure 5b, le siège principal (11) est alors pivoté vers l'avant pour être rabattu entre les montants avant (3) de la poussette et la poignée de préhension (25) est également rabattue après déverrouillage d'un bouton d'autorisation de son pivotement.

Les montants arrière (4) sont ensuite disposés à leur position de pliage par pivotement vers l'avant conformément à la figure 5c et viennent à la position confondue avec la branche intermédiaire (22) de la pièce en forme de C.

Durant ce mouvement, la traverse télescopique (10) passe de sa position longue d'utilisation courante de la poussette en configuration simple ou tandem, à sa position courte de pliage de la poussette.

Le siège auxiliaire, la pièce rigide en forme de C s'inscrivent alors dans le volume défini par les montants avant et les montants arrière dans leur position de pliage de la poussette et présentent ainsi un encombrement minimal.

La structure principale du châssis (traverse supérieure (8), montants avant (3) et arrière 4) non télescopique, décrite ci-dessus à titre d'exemple, a pour avantage d'éviter un coincement des doigts d'un enfant ou d'un adulte manipulant la poussette. Dans ce cas, c'est le siège principal 11 qui est rendu mobile en translation vis à vis du châssis.

Une autre solution, est de proposer un châssis dont certains éléments (la traverse supérieure par exemple) seraient télescopiques, avec les protections de sécurité recommandées. Dans ce cas, le siège principal pourra être fixe en translation, et le châssis augmenter en longueur, pour augmenter l'espace alloué au siège auxiliaire dans sa position déployée, ou être aussi mobile en translation et augmenter encore cet espace.

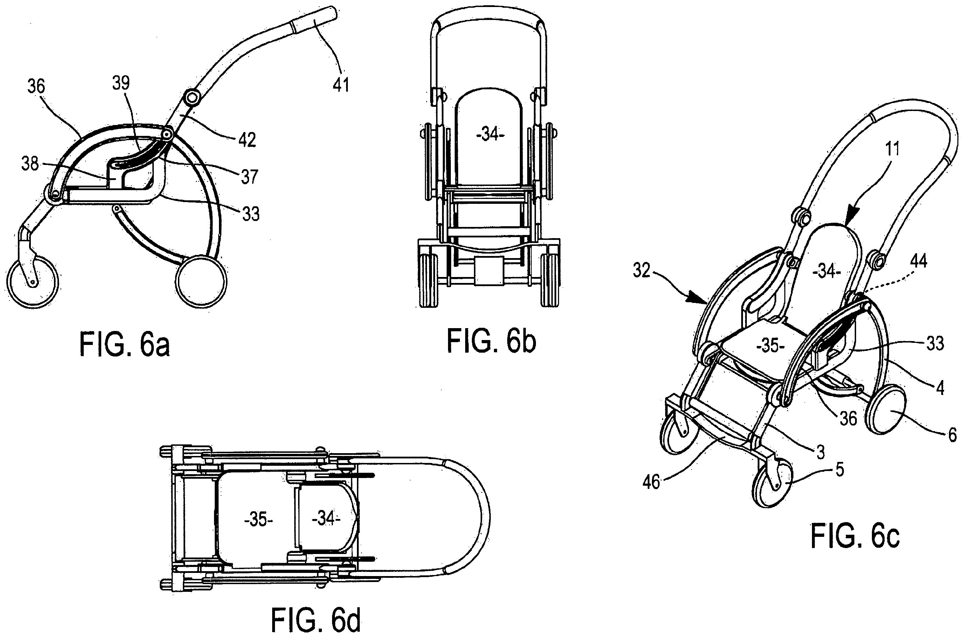

Un exemple de réalisation de cette solution est illustré conformément aux figures 6 à 13, et décrites ci-dessous.

Les éléments communs entre le premier mode de réalisation de l'invention illustré par les figures 1 à 5 et le deuxième mode de réalisation illustré par les figures 6 à 13 portent les mêmes dénominations et les mêmes références.

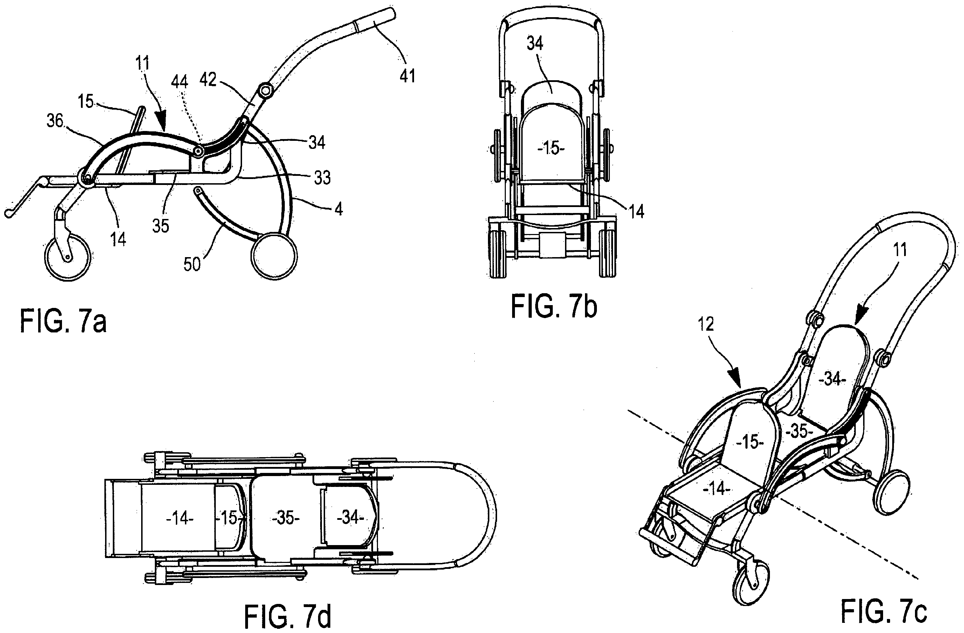

Selon ce deuxième mode de réalisation, le châssis 32 de la poussette comprend principalement :
- Une partie fixe en translation lors du passage entre la configuration simple et la configuration tandem et
- Une partie mobile en translation à cette même occasion
- La partie dite fixe du châssis est composée de :
   ∘ deux coudes latéraux 33 définissant lorsque considérés de côté, une forme générale de L dont les deux branches longent respectivement le dossier 34 du siège principal dans sa position d'accueil d'un enfant, et son assise 35,
   ∘ deux petites arches latérales 37 présentant une forme générale de C dont l'arrondi pointe vers le bas lorsque la poussette est en utilisation normale (figure 6a et 7a), l'extrémité supérieure de chacune est montée fixe sur l'extrémité supérieure du coude correspondant 33, l'extrémité opposée de chaque petite arche étant positionnée par un pied 38 qui la prolonge, en hauteur vis à vis de l'assise du siège principal (par exemple à 5 cm en hauteur de ce siège. Chaque petite arche 37 porte extérieurement un rail de guidage 39 coopérant avec un moyen complémentaire de la partie du châssis qui est mobile en translation lors du passage entre la configuration simple à la configuration tandem de la poussette
   ∘ les deux montants arrière 4
   ∘ le cadre de préhension 41 dont les deux extrémités sont montées sur deux tronçons latéraux 42 prolongeant vers le haut les extrémités supérieures des petites arches 37
- La partie dite mobile du châssis est composée de :
   ∘ Deux barres latérales horizontales 43 (visibles uniquement dans la configuration déployée de la poussette) montées chacune à translation à l'intérieur de la portion horizontale du coude correspondant 33 qui est alors creuse, ou deux parties télescopiques prolongeant les portions horizontales correspondantes du coude 33. Conformément à la figure 7c, l'extrémité avant de chaque barre 43 porte un axe sur lequel est monté le montant avant correspondant 3 de la poussette
   ∘ deux grandes arches latérales 36 présentant une forme générale de C, dont l'arrondi pointe vers le haut lorsque la poussette est en utilisation normale (figure 6a et 7a). Une extrémité arrière de chaque grande arche 36, porte un doigt 44 s'engageant dans le rail de la petite arche correspondante 37 pour se débattre le long de ce rail entre ses extrémités lors du passage entre la configuration simple à la configuration tandem de la poussette. L'extrémité avant de la grande arche 36 est fixée à l'extrémité avant de la barre latérale horizontale correspondante 43 par une liaison pivot lui permettant de modifier son inclinaison lors du passage entre la configuration simple à la configuration tandem de la poussette.

Le siège auxiliaire 12 est monté mobile en translation dans sa configuration à plat sous l'assise du siège principal.

Par exemple, les moyens de translation du siège auxiliaire pourront comprendre des rails latéraux formés sur les faces internes des barres latérales 43, et des doigts complémentaires portés par l'assise du siège auxiliaire, ou tout autre moyen approprié.

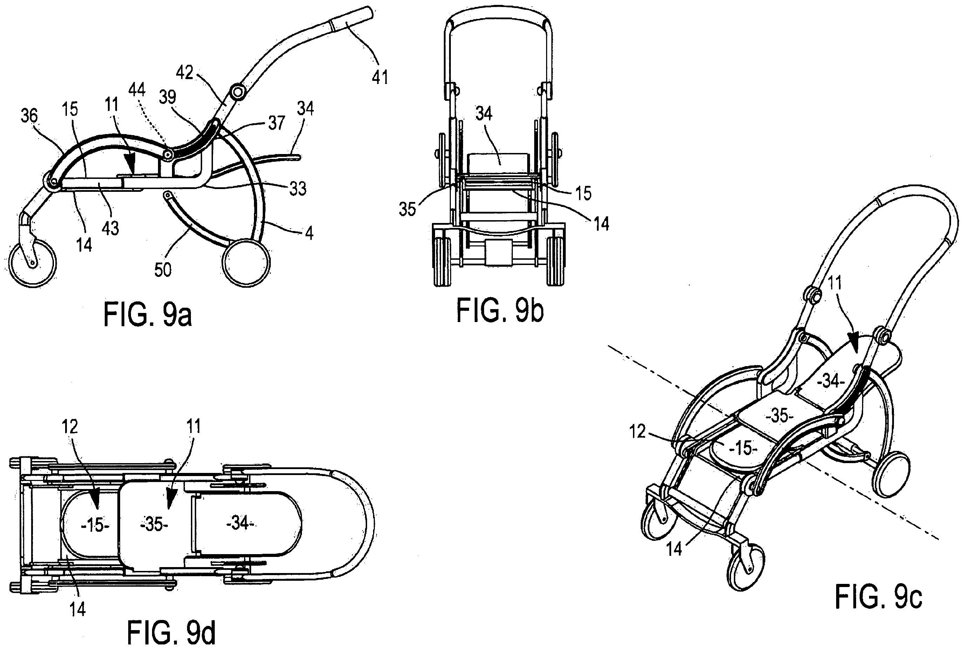

Il est avantageusement monté mobile entre :
- une position complètement rangée sous cette assise principale 35 (figure 6c), dans laquelle le doigt 44 porté par la grande arche 36 est positionné à l'extrémité arrière haute de la petite arche 37 et la barre 43 est complètement rangée à l'intérieur du coude
- une position la plus en avant possible vis à vis de cette assise principale 35 (figure 7c), dans laquelle le doigt 44 porté par la grande arche 36 est positionné à l'extrémité avant basse de la petite arche et la barre 43 est déployée en dehors du coude. Dans cette position, le dossier 15 du siège auxiliaire 12 peut être relevé et un espace suffisant (plus de 10 cm) sépare le long de la barre 43, l'assise du siège principal, du dossier du siège auxiliaire 12, pour permettre le passage des jambes d'un enfant assis à l'arrière,
- une position intermédiaire illustrée sur la figure 9c dans laquelle l'assise 15 du siège auxiliaire est recouverte partiellement par l'assise du siège principal et s'inscrit dans son prolongement pour former un support pour un enfant allongé. Comme visible sur la figure 9a, il existe un léger décalage en hauteur entre la surface supérieure de l'assise du siège principal 11 et la surface supérieure du dossier 15 du siège auxiliaire rabattu en avant à plat.

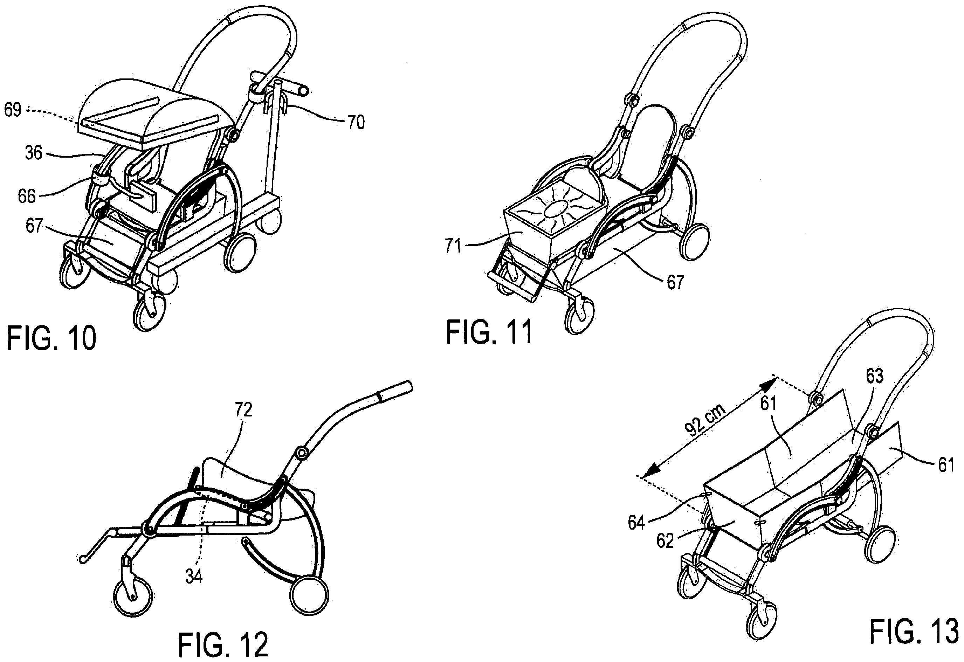

Dans la position intermédiaire d'allongement illustrée sur la figure 9c, conformément à la figure 13, la poussette définit un support long de par exemple 92 cm de long sur lequel pourra venir être fixé un matelas de préférence pliable, de préférence avec des rebords latéraux 61 et au moins frontal 62 et/ou de préférence présentant deux hauteurs prenant en compte le léger décalage en hauteur susmentionné entre la surface supérieure de l'assise du siège principal 11 et la surface supérieure du dossier 15 du siège auxiliaire rabattu en avant à plat (il sera plus épais à l'avant qu'à l'arrière), de sorte que la surface supérieure du matelas soit plane.

Les rebords latéraux 61 et frontal 62 pourront être désolidarisés les uns des autres en libérant les liens 64 qui les unissent à leurs bords adjacents, mais articulés vis à vis du côté correspondant de la base 63 du matelas pour être rabattus contre elle, puis éventuellement l'ensemble pourra être replié encore pour diminuer l'encombrement et être rangé dans un sac de la poussette.

A cet égard, les figures 10 et 11 illustrent un casier de rangement 67 disposé sous les assises des sièges, réalisé en un matériau ou avec une structure lui permettant de s'étendre longitudinalement avec la poussette lors de ses passage entre les configurations tandem et simple.

Comme autres accessoires, conformément à la figure 10, la poussette pourra comprendre :
- des supports de terminaux mobiles 66, type tablette ou téléphone intelligent, à clipser sur par exemple la grande arche,
- des supports pour trottinette 70 ou autre objet avec une partie tubulaire,
- une capote de protection, intégrant un revêtement de protection contre la pluie ou les rayonnement UV pliable dans une poche interne de la capote, par exemple refermée par un zip 69
- un panier 71 conformément à la figure 11, pouvant reposer sur le siège auxiliaire dans sa position déployée, et pourvu d'un moyen de fixation à celui ci
- un nid d'ange 72 , conformément à la figure 12, à fixer à l'arrière du dossier du siège principal occupant une position inclinée vers l'avant, le nid d'ange et l'arrière du dossier étant bien entendu dotés de moyens de fixation complémentaires.
- Le siège auxiliaire 12 pourra porter conformément à la figure 1, un repose pied 46 en forme de U dont les deux extrémités sont fixées aux extrémités du bord frontal 47 de son assise 14, repose pied 46 ainsi disponible pour un enfant seul occupant le siège principal (figure 6à, que pour un enfant occupant le siège auxiliaire (figure 7).

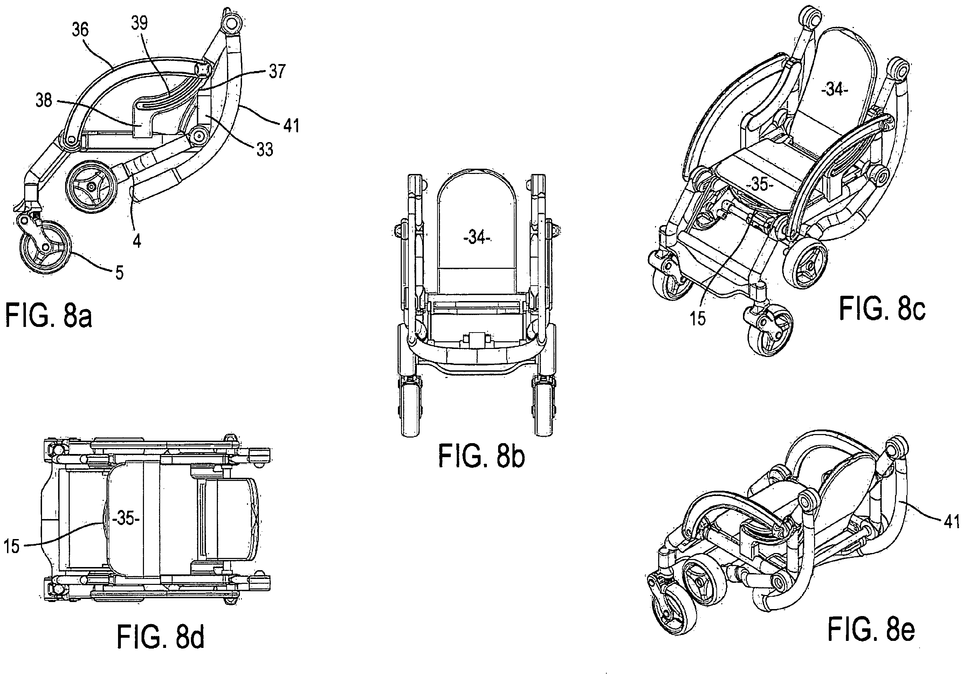

Pour réaliser le pliage/dépliage de la poussette, les montants arrière peuvent être montés pivotants autour d'un axe horizontal coïncidant avec l'angle du coude (variante de réalisation de la figure 8) ou avec l'extrémité supérieure de la petite arche 37 (variante de réalisation de la figure 7), la poussette comprenant dans ce cas également des montants arrière auxiliaires de renfort 50

Le pliage de la poussette selon ce mode de réalisation, s'effectue depuis sa configuration simple conformément à la figure 8, en :
- faisant pivoter les montants arrière 4 sous les assises superposées des sièges
- rabattant vers le bas le cadre de préhension qui vient longer les montants arrière 4.

L'invention est décrite dans ce qui précède à titre d'exemple. Il est entendu que l'homme du métier est à même de réaliser différentes variantes de réalisation de l'invention sans pour autant sortir du cadre de l'invention.

## Revendications

1. Poussette simple convertible en poussette tandem comprenant :
- un châssis de roulement (3, 4, 8, 10) ;
- un siège principal (11) monté mobile en translation longitudinale vis à vis du châssis entre une position simple occupant et une position double occupants ; **caractérisé en ce que** la poussette comprend
- un siège auxiliaire (12), monté mobile en translation longitudinale vis à vis du châssis (3, 4, 8, 10) entre une position inactive escamoté à plat sous le siège principal occupant sa position simple occupant (11) et une position active déployée en dehors du siège principal occupant sa position double occupants (11).

2. Poussette selon la revendication 1, dans laquelle le siège auxiliaire (12) comprend une assise (14) et un dossier (15) rabattable contre l'assise (14) dans la position inactive escamotée.

3. Poussette selon la revendication 2, comprenant des moyens de déplacement automatique du dossier (15) du siège auxiliaire (12) entre une position rabattue et la position déployée sur déplacement du siège auxiliaire (12) entre sa position escamotée et sa position déployée.

4. Poussette selon l'une des revendications précédentes, dans laquelle le siège principal (11) est monté en translation au moyen d'un axe coulissant dans un rail du châssis.

5. Poussette selon l'une des revendications précédentes, dans laquelle le siège principal (11) est monté à pivotement entre une position d'assise d'un occupant et une position d'allongement d'un occupant dans la position simple occupant et/ou dans la position double occupants.

6. Poussette selon l'une des revendications précédentes, dans laquelle le châssis (3, 4, 8, 10) comprend deux montants avant (3) supportant les roues avant et deux montants arrière (4) supportant les roues arrière, les montants avant (3) et arrière (4) situés d'un même côté du châssis étant rigidement fixés l'un à l'autre par une traverse principale (8).

7. Poussette selon la revendication précédente, dans laquelle le siège principal (11) est monté à pivotement entre la position d'assise d'un occupant et une position de pliage de la poussette dans laquelle il est rabattu entre les montants avant (3) du châssis lorsque le siège auxiliaire (12) occupe sa position escamotée.

8. Poussette selon la revendication 6 ou 7, dans laquelle les montants arrière (4) sont montés à pivotement vis à vis de la traverse (8) entre une position classique de roulage et une position de pliage de la poussette dans laquelle ils sont disposés sensiblement parallèlement aux montants avant (3).

9. Poussette selon la revendication précédente, dans laquelle le siège auxiliaire (12) et ses moyens de déplacement (20) entre les positions escamotée et déployée s'inscrivent dans le volume défini par les montants avant (3) et les montants arrière (4) dans leur position de pliage de la poussette.

10. Poussette selon l'une des revendications précédentes, dans laquelle les moyens de déplacement du siège auxiliaire (12) entre sa position escamotée et sa position déployée comprennent une pièce rigide à section en forme de C (20) dont l'ouverture est orientée vers l'avant de la poussette, et dont les deux branches parallèles (21) sont montées coulissantes vis à vis du châssis de la poussette.

11. Poussette selon l'une quelconque des revendications 1 à 3, dans laquelle le châssis comprend deux barres latérales déployables (43) relativement à des supports fixes latéraux correspondants (33), deux bras latéraux (36) montés par leurs extrémités correspondantes, aux extrémités avant de la barre par des liaisons pivots, les extrémités opposées de ces bras se translatant dans des rails de guidage solidaires des supports fixes correspondants 33 lorsque la poussette passe d'une configuration simple à une configuration double.

12. Poussette selon la revendication précédente, dans laquelle le siège auxiliaire est monté à translation relativement à la barre entre ses positions escamoté et déployé.

13. Poussette selon la revendication précédente, comprenant des moyens de blocage du siège auxiliaire dans une position intermédiaire, dans laquelle lorsque son dossier est rabattu contre son assise, la face arrière de son assise s'étend dans le prolongement longitudinal de l'assise du siège principal.

14. Poussette selon la revendication précédente, comprenant une matelas comprenant une base définissant deux épaisseurs différentes susceptibles de compenser une différence de hauteur existant entre la surface supérieure du dossier rabattu du siège auxiliaire occupant sa position intermédiaire et la surface supérieure de l'assise du siège principal

15. Poussette selon l'une quelconque des revendications précédentes comprenant une sac présentant des dimensions variables dans le sens d'allongement de la poussette entre ses configurations tandem et simple.

## Patentansprüche

1. Einzel-Kinderwagen, der in einen Tandem-Kinderwagen umgewandelt werden kann, umfassend:
- ein Fahrgestell (3, 4, 8, 10);
- einen Hauptsitz (11), der in Längstranslation in Bezug auf das Fahrgestell zwischen einer Einzelbelegungsposition und einer Doppelbelegungsposition verschiebbar montiert ist; **dadurch gekennzeichnet, dass** der Kinderwagen umfasst
- einen Zusatzsitz (12), der in Längstranslation in Bezug auf das Fahrgestell (3, 4, 8, 10) zwischen einer inaktiven Position, in der er flach unter den Hauptsitz eingeklappt ist und seine Einzelbelegungsposition (11) einnimmt, und einer aktiven Position, in der er außerhalb des Hauptsitzes ausgeklappt ist und seine Doppelbelegungsposition (11) einnimmt, verschiebbar montiert ist.

2. Kinderwagen nach Anspruch 1, wobei der Zusatzsitz (12) eine Sitzfläche (14) und eine Rückenlehne (15) aufweist, die in der eingeklappten inaktiven Position gegen die Sitzfläche (14) geklappt werden kann.

3. Kinderwagen nach Anspruch 2, umfassend Mittel zum automatischen Bewegen der Rückenlehne (15) des Zusatzsitzes (12) zwischen einer eingeklappten Position und der ausgeklappten Position bei Bewegung des Zusatzsitzes (12) zwischen seiner eingeklappten Position und seiner ausgeklappten Position.

4. Kinderwagen nach einem der vorhergehenden Ansprüche, wobei der Hauptsitz (11) mittels eines in einer Schiene des Fahrgestells gleitenden Bolzens translatorisch montiert ist.

5. Kinderwagen nach einem der vorhergehenden Ansprüche, wobei der Hauptsitz (11) schwenkbar zwischen einer Sitzposition eines Kindes und einer Liegeposition eines Kindes in der Einzelbelegungsposition und/oder in der Doppelbelegungsposition montiert ist.

6. Kinderwagen nach einem der vorhergehenden Ansprüche, wobei das Fahrgestell (3, 4, 8, 10) zwei vordere Stützen (3), die die Vorderräder unterstützen, und zwei hintere Stützen (4), die die Hinterräder unterstützen, umfasst, wobei die vorderen (3) und hinteren (4) Stützen, die sich auf derselben Seite des Fahrgestells befinden, durch einen Hauptquerträger (8) starr miteinander verbunden sind.

7. Kinderwagen nach dem vorhergehenden Anspruch, wobei der Hauptsitz (11) schwenkbar zwischen der Sitzposition eines Kindes und einer Klappposition des Kinderwagens montiert ist, in der er zwischen den vorderen Rahmenstützen (3) umgeklappt ist, wenn sich der Zusatzsitz (12) in seiner Klappposition befindet.

8. Kinderwagen nach Anspruch 6 oder 7, wobei die hinteren Stützen relativ zum Querträger (8) zwischen einer Rollposition und einer eingeklappten Position des Kinderwagens schwenkbar montiert sind, in der sie im wesentlichen parallel zu den vorderen Stützen (3) angeordnet sind.

9. Kinderwagen nach dem vorhergehenden Anspruch, wobei der Zusatzsitz (12) und die dazugehörigen Verstellmittel (20) zwischen der eingeklappten und der ausgeklappten Position innerhalb des Volumens liegen, das durch die vorderen Stützen (3) und die hinteren Stützen (4) in ihrer eingeklappten Position des Kinderwagens definiert ist.

10. Kinderwagen nach einem der vorhergehenden Ansprüche, wobei die Mittel zum Bewegen des Zusatzsitzes (12) zwischen seiner eingeklappten Position und seiner ausgeklappten Position ein starres C-förmiges Profilteil (20) umfassen, dessen Öffnung zur Vorderseite des Kinderwagens hin ausgerichtet ist und dessen zwei parallele Arme (21) in Bezug auf das Fahrgestell des Kinderwagens verschiebbar montiert sind.

11. Kinderwagen nach einem der Ansprüche 1 bis 3, wobei das Fahrgestell zwei seitliche Stangen (43) aufweist, die relativ zu den entsprechenden seitlichen festen Trägern (33) ausklappbar sind, wobei zwei seitliche Arme (36) mit ihren entsprechenden Enden an den vorderen Enden der Stange mittels Schwenkverbindungen montiert sind, wobei sich die gegenüberliegenden Enden dieser Arme in Führungsschienen, die mit den entsprechenden festen Trägern (33) fest verbunden sind, translatorisch verschieben, wenn der Kinderwagen von einer Einzelsitz-Konfiguration in eine Doppelsitz-Konfiguration gebracht wird.

12. Kinderwagen nach dem vorhergehenden Anspruch, wobei der Zusatzsitz relativ zur Stange zwischen seiner eingeklappten und ausgeklappten Position translatorisch montiert ist.

13. Kinderwagen nach dem vorhergehenden Anspruch, umfassend Mittel zum Arretieren des Zusatzsitzes in einer Zwischenstellung, in der sich, wenn seine Rückenlehne gegen seine Sitzfläche umgeklappt ist, die Rückseite seiner Sitzfläche in Längsrichtung der Sitzfläche des Hauptsitzes erstreckt.

14. Kinderwagen nach dem vorhergehenden Anspruch, umfassend eine Matratze mit einer Unterlage mit zwei unterschiedlichen Dicken, die geeignet sind, einen Höhenunterschied auszugleichen, der zwischen der Oberseite der umgeklappten Rückenlehne des Zusatzsitzes, der seine Zwischenposition einnimmt, und der Oberseite der Sitzfläche des Hauptsitzes besteht.

15. Kinderwagen nach einem der vorhergehenden Ansprüche, umfassend eine Tasche mit variablen Abmessungen in Längsrichtung des Kinderwagens zwischen seiner Tandem- und Einzelkonfiguration.

## Claims

1. Single stroller which can be converted into a tandem stroller, comprising:
- an undercarriage (3, 4, 8, 10);
- a main seat (11) mounted so as to be able to move in longitudinal translation with respect to the undercarriage between a single occupant position and a double occupant position; **characterized in that** the stroller comprises
- an auxiliary seat (12) mounted so as to be able to move in longitudinal translation with respect to the undercarriage (3, 4, 8, 10) between an inactive position retracted flat under the main seat occupying its single occupant position (11) and an active position deployed outside the main seat occupying its double occupant position (11).

2. Stroller according to claim 1, wherein the auxiliary seat (12) comprises a seat base (14) and a backrest (15) which can be folded against the seat base (14) when in the inactive retracted position.

3. Stroller according to claim 2, comprising means for automatically moving the backrest (15) of the auxiliary seat (12) between a folded position and the deployed position when the auxiliary seat (12) moves between its retracted position and its deployed position.

4. Stroller according to any of the preceding claims, wherein the main seat (11) is translatably mounted by means of a shaft which slides in a rail of the undercarriage.

5. Stroller according to any of the preceding claims, wherein the main seat (11) is pivotably mounted between a seated occupant position and a prone occupant position in the single occupant position and/or in the double occupant position.

6. Stroller according to any of the preceding claims, wherein the undercarriage (3, 4, 8, 10) comprises two front uprights (3) which support the front wheels and two rear uprights (4) which support the rear wheels, the front (3) and rear (4) uprights located on a common side of the undercarriage being rigidly fixed to one another by a main crossmember (8).

7. Stroller according to the preceding claim, wherein the main seat (11) is pivotably mounted between the seated occupant position and a folding position of the stroller in which said seat is folded between the front uprights (3) of the undercarriage when the auxiliary seat (12) occupies its retracted position.

8. Stroller according to either claim 6 or claim 7, wherein the rear uprights (4) are pivotably mounted with respect to the crossmember (8) between a classic rolling position and a folding position of the stroller in which said uprights are arranged substantially parallel to the front uprights (3).

9. Stroller according to the preceding claim, wherein the auxiliary seat (12) and its means (20) for moving between the retracted and deployed positions are part of the volume defined by the front uprights (3) and the rear uprights (4) when in their folding position of the stroller.

10. Stroller according to any of the preceding claims, wherein the means for moving the auxiliary seat (12) between its retracted position and its deployed position comprise a rigid part (20) having a C-shaped cross section, the opening of which is oriented towards the front of the stroller, and the two parallel branches (21) of which are slidably mounted with respect to the undercarriage of the stroller.

11. Stroller according to any of claims 1 to 3, wherein the undercarriage comprises two lateral bars (43) which can be deployed relative to corresponding lateral fixed supports (33), two lateral arms (36) mounted, by their corresponding ends, at the front ends of the bar by means of pivot links, the opposite ends of these arms translating into guide rails rigidly secured to the corresponding fixed supports 33 when the stroller changes from a single configuration to a double configuration.

12. Stroller according to the preceding claim, wherein the auxiliary seat is translatably mounted relative to the bar between its retracted and deployed positions.

13. Stroller according to the preceding claim, comprising means for locking the auxiliary seat in an intermediate position in which, when the backrest of said seat is folded against its seat base, the rear face of its seat base extends in the longitudinal extension of the seat base of the main seat.

14. Stroller according to the preceding claim, comprising a mattress which comprises a base defining two different thicknesses capable of compensating for a difference in height between the upper surface of the folded backrest of the auxiliary seat occupying its intermediate position and the upper surface of the seat base of the main seat.

15. Stroller according to any of the preceding claims, comprising a bag having dimensions which can be varied in the direction of elongation of the stroller between its tandem and single configurations.
